# EUROPEAN PATENT SPECIFICATION

(11) **EP 0 829 673 B1**
(45) Date of publication and mention of the grant of the patent: **14.11.2001**
(21) Application number: 97500115.7
(22) Date of filing: 02.07.1997
(51) Int. Cl.: F16L 47/00

(54) **Procedure to produce under pressure branchings in plastic pipes for fluid conduits**
Verfahren zum Herstellen von Verzweigungen in unter Druck stehenden Kunststoffrohren für Flüssigkeitsleitungen
Procédé pour la production de dérivations sous pression dans des tuyaux en matière plastique pour fluide

(30) Priority: 08.07.1996 ES 9601518
(43) Date of publication of application: 18.03.1998
(73) Proprietor: Hombravella Abbad, Marcelo D., 08022 Barcelona (ES); Guillo Vive, Daniel D., 08022 Barcelona (ES)
(72) Inventor: Hombravella Abbad, Marcelo D., 08022 Barcelona (ES); Guillo Vive, Daniel D., 08022 Barcelona (ES)
(74) Representative: Isern Jara, Jaime

(56) References cited:
- EP-A- 0 300 795
- DE-A- 3 148 332
- GB-A- 1 229 175
- US-A- 4 155 373
- US-A- 4 216 793

## Description

### OBJECT OF THE INVENTION

The present Invention Patent application has as an object a procedure to perform pressurized branchings in plastic material piping of fluid utility lines, this procedure providing combined significant advantanges and innovations.

More particularly, in the invention has been devised a system allowing to perform a pressurized branching and by using a suitable stopper, to cut off the supply when repairs are to be performed in the utility connections.

### BACKGROUND OF THE INVENTION

Presently and referring to the state of the art it can be said that in the PVC piping, any branches performed to the utility lines are using mechanically fastened flanges. If the branch shall be pressurized, some of the flanges being prepared for this type of branches are then used or otherwise a ball valve is mounted and the drilling tool is pushed to pass through this valve.

Also, on the polyethylene piping, branches are fitted using the following techniques:
- Fixed-flanged branches on piping by mechanical fastening and using the same techniques already described for PVC.
- Branchings provided with polyethylene fittings welded (electrowelded) to the piping. This system being the most suitable technique since the polyethylene remains restricted to a branching diameter of 63 mm, due to the proper shape of the branching fitting.

British patent no. 1,229,175 discloses a tapping tee for plastic pipes in which a threaded plug 7 is fit in a tee body and provided with an axial hole with an upper cylindrical section 10 and a bottom threaded section 11, thus allowing a spigot 14 forming the head of a disc 13 extended in a cutting tool 12 to be moved up and down by means of an axial spindle 23 and screwed in the threaded section 11 of the plug. No provision is made of a permanent shaft and of means to drive said shaft to in turn to deplace a member closing a branch conduit.

European patent no. 0,300,795 discloses an adaptor for presure testing in which a hexagonal bolt head 22 enters a hexagonal socket 13' in the neck of a cutter or cutting tool 14. The adaptor body is rotated and head 22 causes a resilient washer 23 to expand radially, thus gripping the internal surface of the cutter carrier 13. Rotation of the adaptor body causes the cutter to move downwards and to close the fluid way towards a side conduit. The cutter closing a branch conduit is deplaced by rotation of a driving system and no longitudinal motion of a shaft is provided.

### DESCRIPTION OF THE INVENTION

The procedure to perform pressurized branchings in plastic material piping of fluid utility lines, object of the present invention, uses a branching "T" devised to be fitted on plastic material piping and joined to the piping using a suitable technique for each type of plastic.

Construction is performed taking conventional components, such as a seat on the piping and a "T" which are modified and mutually welded and added thereon the required upper parts, such as an inside bushing and an outside end on which a cover is fitted using suitable airtight seals as required for this purpose.

It has also been envisaged the seat and "T" unit to be integrated in a single part.

The procedure of the invention allows to perform a pressurized branching and use a suitable stopper to cut off the supply to perform repairs in the utility connections, with the particularity that due to its simplicity, branches of greater diameter can be obtained while being also equally valid for small diameters.

In the preferred mode of installation, the branching "T" is joined on a piping by using welding or bonding, according to the type of plastic material used and the branching is fitted and checked to subsequently drill the piping and remove the cutting tool up to the most raised position.

Further, a spatula or chopping block is inserted and the drilling equipment is removed, the cover of the upper part of the branching "T" is being threaded until the spatula is abutted, so that the spatula can subsequentty be drawn out and the cover home-threaded completely; the installation consequently remains finished off.

To fit the stopper, the cover is being unthreaded until the notch appears, the spatula is then inserted so that the cover can then be removed and the stopper tool threaded.

Further, the spatula is removed and the relative piston of the stopper is then lowered to its working position.

The stopper is immediately actuated so that the seal is airtight and the branching remained plugged.

To disassembly and have all at the initial position, the previous operation is reversed.

To complement the description now to be further explained and to help to a better understanding of its features, the present descriptive specification is accompanied by a set of drawings which figures illustratively and non-exhaustively are showing the most significant details of the invention.

### BRIEF DESCRIPTION OF THE DRAWINGS

Figures 1 to 3 show the main phases of the preferred mode of installation.

Figure 4 shows the assembly of a preferable type of stopper.

Figure 5 shows an alternative construction embodiment of the branching "T".

### DESCRIPTION OF A PREFERABLE EMBODIMENT

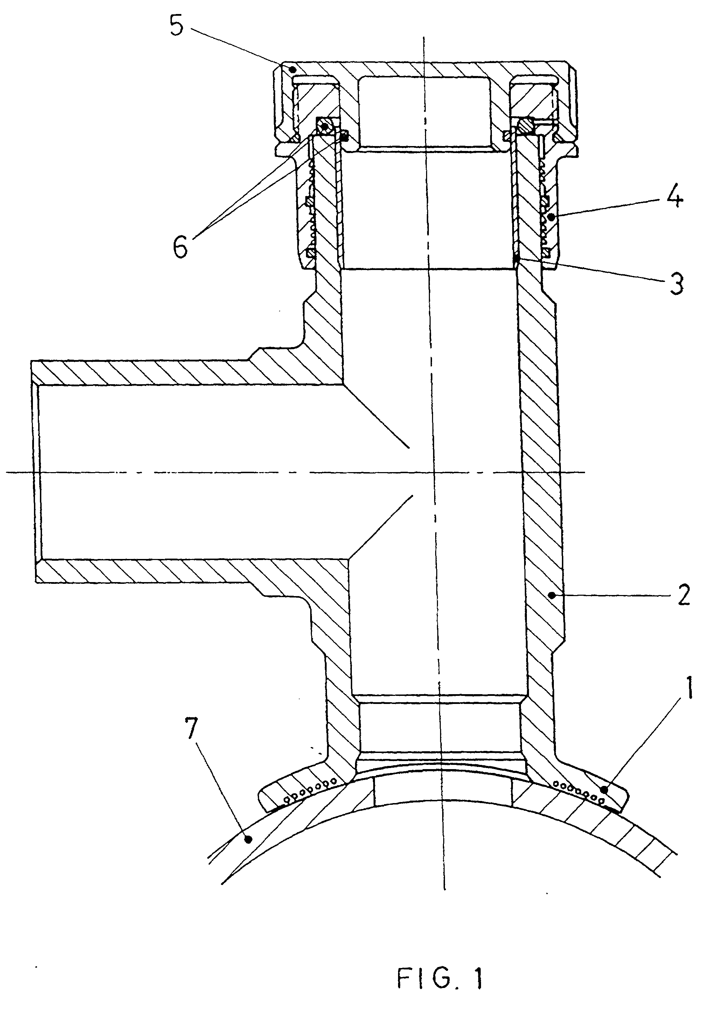

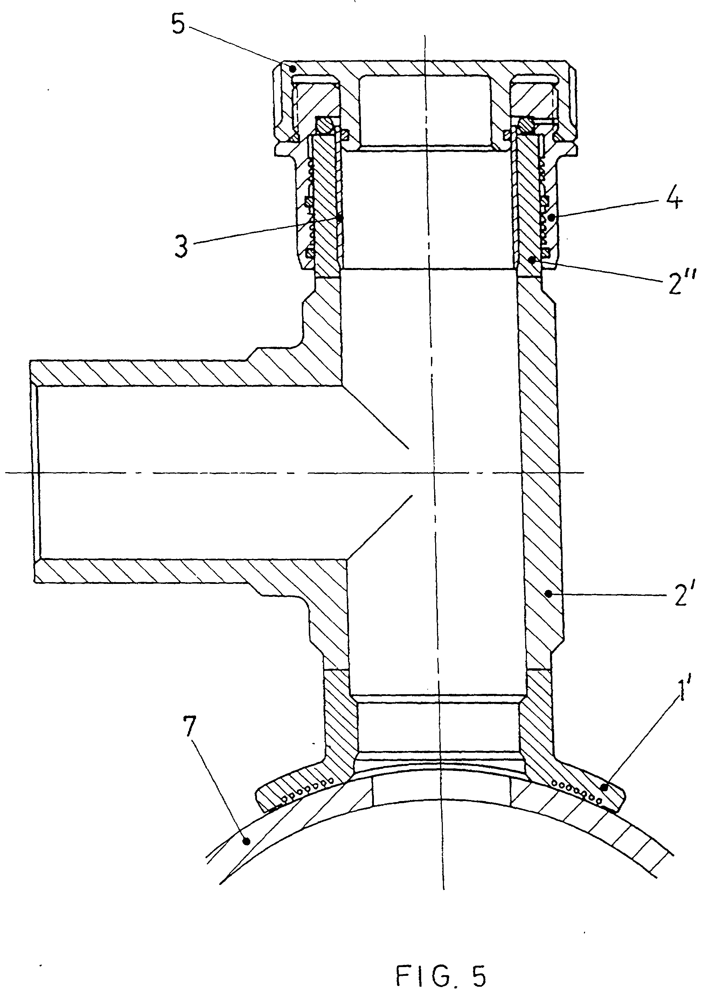

Pursuant to said figures and according to the adopted numbering, it can be noted in this embodiment, a unit made up with a seat 1 and a branching "T" 2, manufactured as a single part (figure 1) or rather by parts 1', 2' and 2" joined by each other welding or the like (figure 5) such that whichever the case, at the branching "T" upper part is fitted an inside bushing 3 and an outside end 4 over which a cover 5 is mounted with the suitable airtight seals 6.

Said branching "T" is joined on a plastic material piping 7 of a fluid utility lines, for instance by electrowelding (figure 1) and the branching is then fitted and verified.

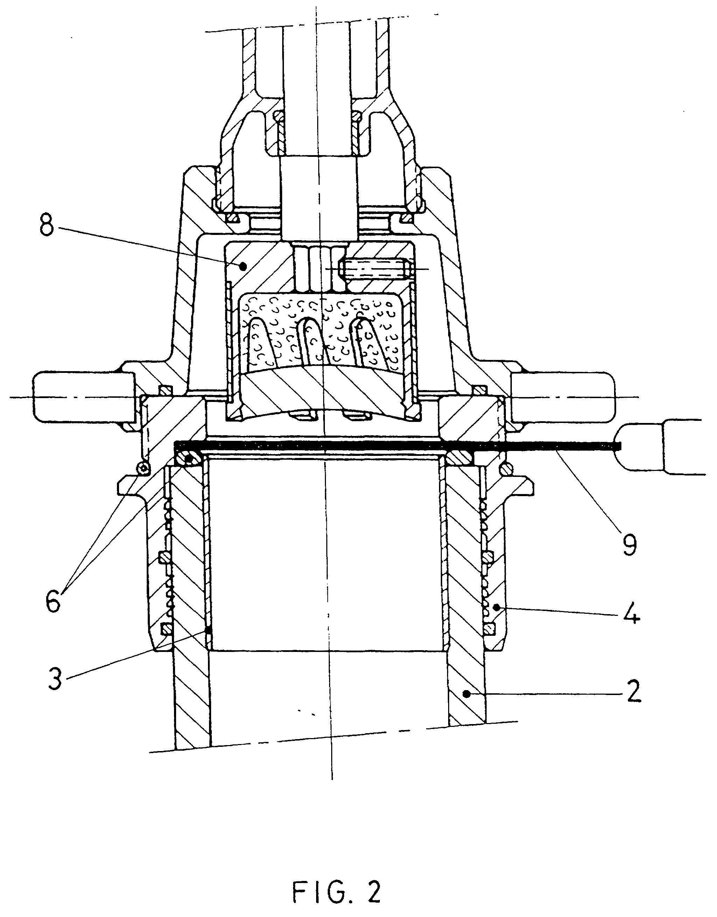

Further, the piping is drilled and the cutting tool 8 removed up to the most raised position; the spatula or chopping block is then inserted (figure 2).

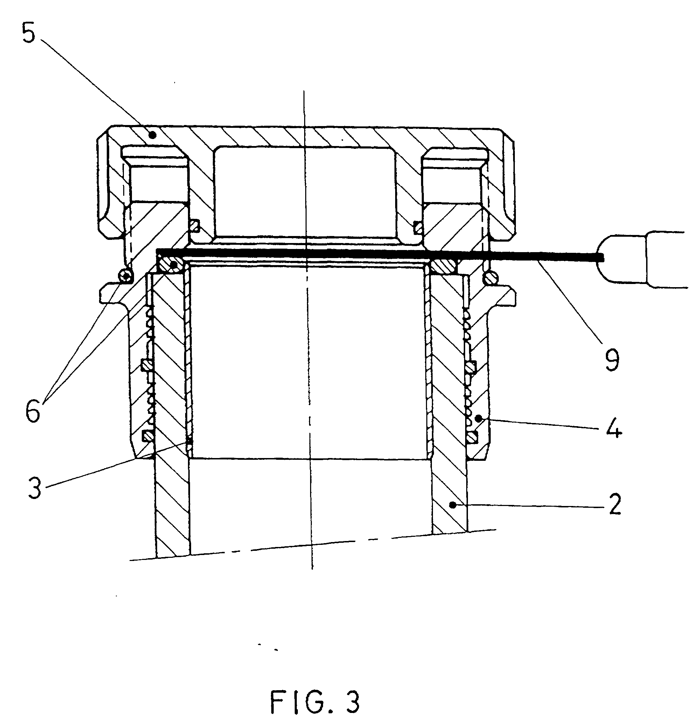

The drilling equipment is immediately removed and the cover 5 threaded until the spatula 9 is abutted (figure 3).

Finally, the spatula 9 is drawn out and the cover 5 home-threaded completely; the installation consequently remains finished off.

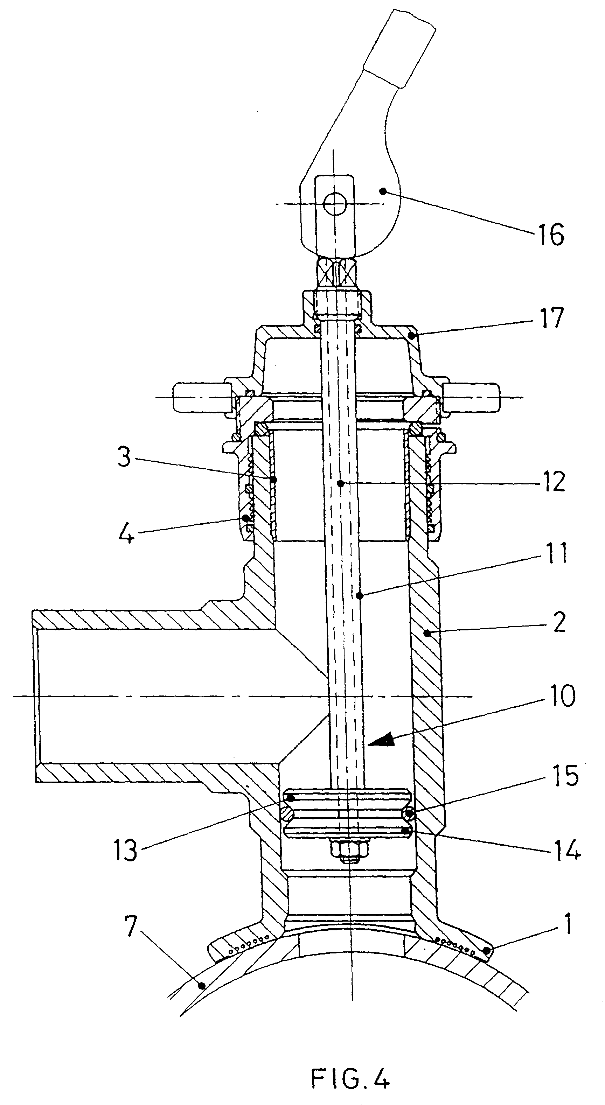

In the figure 4, a stopper tool 10 made up with two outside 11 and inside 12 concentric shafts is shown, the latter is downwardly topped by two upper 13 and lower 14 small plates running inside the T", whereas is upwardly provided a driving cam 16 using the coupling of a bell 17.

In the assembly of said stopper 10, the cover shall be unthreaded until the relative notch appears to insert the spatula 9 and said cover 5 is removed.

Further, the stopper tool 10 is threaded and the spatula 9 removed, and the stopper piston is then lowered to its working position and said stopper is actuated with the cam 16, so that the seal 15 is widened and airtightness achieved; the branching thereby being plugged.

## Claims

1. A procedure to perform pressurized branchings in plastic material piping of fluid utility lines,
of the kind including an inside stopper to at will permit or block the fluid flow, said stopper being driven by an axial shaft passing through a head fixed member on the upper part of the branching,
and with this procedure a pressurized branching can be performed and, using a suitable stopper, the supply can be cut off to perform repairs in the utility connections,
***characterized in that***
a branching "T" (2) has been provided downwardly having a seat (1) joined on the piping (7) by welding, bonding or the like, arranging in the upper part of said "T" an inside bushing (3) and an outside end (4) on which a cover (5) is coupled, using suitable airtight seals (6);
said construction is properly to receive a piping (7) drilling equipment such as one including a cutting tool (8) driven by a rotary shaft to perform a hole in the piping (7), the used cutting tool (8) being then removed up to the most raised position, and a spatula or chopping block (9) inserted in a relative transversal notch existing in the upper part of said "T";
the drilling equipment is immediately removed and the cover (5) threaded until the spatula (9) is abutted; the spatula is subsequently drawn out and said cover (5) home threaded completely, the installation consequently remaining finished off.

2. A PROCEDURE TO PERFORM PRESSURIZED BRANCHINGS IN PLASTIC MATERIAL PIPING OF FLUID UTILITY LINES, according to claim 1, **characterized in that** a stopper (10) suitable to travel inside the "T" construction has been provided, and the assembly to said "T" comprising to unthread said cover (5) over the latter until the relative notch appears to insert then the spatula (9), said cover (5) being then removed, said stopper threaded and the spatula removed, to immediately lower the stopper piston down to its working position and actuating said stopper so that with the seals (15) the proper airtightness is achieved, and the branching plugged.

3. A PROCEDURE TO PERFORM PRESSURIZED BRANCHINGS IN PLASTIC MATERIAL PIPING OF FLUID UTILITY LINES, according to claims 1 and 2, **characterized in that** said branching "T" can be made up with a single part (1, 2) or rather with several components (1'), (2') (2") joined together each other by welding or the like.

## Patentansprüche

1. Verfahren, um unter Druck Ableitungen in Kunststoffrohren in Netzen zur Verteilung von Flüssigkeiten durchzuführen, des Typs, der ein Verschlussstück miteinschließt, mit dessen Hilfe der Durchfluss der Flüssigkeit gesperrt wird, auszuführen, wobei dieses Verschlussstück mit Hilfe einer axialen Welle betrieben wird, die ein festes Glied mit Kopfstück des oberen Teils der Ableitung durchquert; mit diesem Verfahren kann man eine Ableitung unter Druck durchführen und bei Verwendung eines geeigneten Verschlussstücks kann die Zuleitung unterbrochen werden, um Reparaturen in den Anschlüssen für Flüssigkeiten durchzuführen, dadurch gekenzeichnet dass eine "T" -Ableitung (2) zur Verfügung gestellt wird, die unten eine Aufnahme (1) hat, die auf einer Rohrleitung (7) angeschweißt, angeklebt oder ähnlich befestigt ist und im oberen Teil des erwähnten "T"s befindet sich eine innere Buchse (3) und äußeres Abschlussstück (4), auf dem ein Deckel (5) angebracht wird, für den geeignete, hermetisch abgeschlossene Dichtungen (6) verwendet werden, so dass diese Installation dazu geeignet ist, eine Bohrmaschine zum Bohren des Rohrs (7) aufzunehmen, zum Beispiel ein Bohrmaschine mit einem Schneidewerkzeug (8), das von einer rotierenden Welle angetrieben wird, um ein Loch in die Rohrleitung (7) zu bohren, und dann das benutzte Schneidewerkzeug (8) bis zur höchsten Position herauszuziehen, und einen Spachtel oder einen Meißel (9) in einer querlaufenden Rille, die sich am oberen Teil des genannten "T"s befindet, anzubringen, wobei die Bohrmaschine sofort herausgezogen und der Deckel (5) solange zugedreht wird, bis er den Spachtel berührt, anschließend wird dieser Deckel bis zum Anschlag gedreht und die Installation ist beendet.

2. Verfahren, um unter Druck Ableitungen in Kunststoffrohren in Netzen zur Verteilung von Flüssigkeiten durchzuführen, nach Patentanspruch 1, dadurch gekenzeichnet dass mit Hilfe eines Verschlussstücks (10), das dazu in der Lage ist, das Innere der Konstruktion in "T" zu durchlaufen, wobei für dessen Montage in diesem "T" der genannte obere Deckel (5) der Konstruktion abgeschraubt werden muss, bis die entsprechende Rille zum Einführen des Spachtels (9) erscheint. wobei wird dieser Deckel (5) entfernt wird, und dieses Verschlussstück eingeschraubt und der der Spachtel entfernt wird, damit die Klappe des Verschlussstücks bis zur Arbeitsposition sinken kann, wobei dieses Verschlussstück betätigt wird, damit mittels von Dichtungen (15) die notwendige Dichte erreicht wird und die Ableitung abgedichtet wird.

3. Verfahren, um unter Druck Ableitungen in Kunststoffrohren in Netzen zur Verteilung von Flüssigkeiten auszuführen, nach den Patentansprüchen 1 und 2, dadurch gekenzeichnet dass das beschriebene Ableitungs-"T" aus einem einzigen Teil (1, 2) bestehen kann, oder aus mehreren Komponenten (1'), (2'), (2"),die miteinander durch Schweißen oder ein ähnliches Verfahren verbunden sind.

## Revendications

1. Procédé pour effectuer sous pression des dérivations dans des tuyauteries en matière plastique des réseaux de distribution des fluides,
du genere qui comprend un obturateur permettant de bloquer le flux d'un fluide, le dit obturateur étant actionné moyennant un arbre axiel passant à travers un membre fixe de tête dans la partie supérieure de la dérivation,
ce procédé permettant de réaliser une dérivation sous pression et, en employant un obturateur approprié, couper l'approvisionement du fluide en vue d'effectuer des dépannages dans les branchements des fluides,
**caractérisé en ce qu'**il comprend l'emploi d'un membre (2) en "T" dont la partie inférieure est derivée en un siège (1) appliqué sur le tuyau (7) moyennant soudure, collage ou similaire, la partie supérieure du dit membre en "T" comprennant une douille intérieure (3) et un terminal annulaire (4) sur lequel un couvercle (5) est appliqué en utilisant des joints (6) appropriés,
la construction susindiquée étant adaptée à recevoir un dispositif pour percer le tuyau (7), tel qu'un dispositif pourvu d'un outil coupant (8) actionné par un arbre tournant en vue de produire un orifice dans le tuyau (7), l'outil coupant (8) étant après sorti jusqu'à la position la plus élevée, et un diaphragme (9) s'introduisant dans une rainure transversale existant dans la partie supérieure du dit "T",
le dispositif de perçage est immédiatement séparé et le couvercle (5) est appliqué par filetage jusqu'à ce qu'il touche le diaphragme (9); ce dernier est alors séparé et le couvercle est verrouillé jusqu'au fond, l'installation étant ainsi terminée.

2. Procédé pour effectuer sous pression des dérivations dans des tuyauteries en matière plastique des réseaux de distribution des fluides,
selon la revendication 1, **caractérisé par le fait qu'**on a prévu un obturateur (10) adapté pour coulisser à l'intérieur du membre (2) en "T", son inclusion dans le dit membre en "T" comprenant le déverrouillage du couvercle (5) jusqu'à l'apparition de la rainure destinée au diaphragme (9) et la séparation du couvercle, le verrouillage de l'obturateur (10) et la séparation du diaphragme, pour faire ensuite descendre le piston de l'obturateur jusqu'à sa position fonctionnelle et pousser l'obturateur pour que, moyennant des joints (15), l'étanchéité se réalise et la dérivation soit obturée.

3. Procédé pour effectuer sous pression des dérivations dans des tuyauteries en matière plastique des réseaux de distribution des fluides, selon les revendications 1 et 2, **caractérisé par le fait que** le membre (2) en "T" de dérivation peut être constitué par une unique pièce (1, 2) ou par divers éléments (1', 2', 2") unis entre eux par soudure ou similaire.
